# EUROPÄISCHE PATENTANMELDUNG

(11) **EP 4 458 736 A1**
(43) Veröffentlichungstag der Anmeldung: **06.11.2024**
(21) Anmeldenummer: 24170399.0
(22) Anmeldetag: 16.04.2024
(51) Int. Cl.: B65G 17/06

(54) **KETTENGLIED FÜR EINE KURVENGÄNGIGE FÖRDERKETTE, KURVENGÄNGIGE FÖRDERKETTE UND TRANSFERSYSTEM MIT KURVENGÄNGIGER FÖRDERKETTE**

(30) Priorität: 05.05.2023 DE 102023204178
(71) Anmelder: Robert Bosch GmbH, 70442 Stuttgart (DE)
(72) Erfinder: Gruber, Johannes, 71154 Nufringen (DE)

(57) **Zusammenfassung**

Offenbart ist ein Kettenglied (1) für eine kurvengängige Förderkette (100) oder einer kurvengängigen Förderkette (100) für ein oder eines Transfersystems (101), mit einer Förderplatte (4) mit einer Oberseite (6), die vorgesehen und ausgestaltet ist, insbesondere bei Anordnung des Kettengliedes (1) in einem Obertrum des Transfersystems (101), ein zu förderndes Gut zu stützen, wobei an einer Unterseite (40) der Förderplatte (4), insbesondere fertigungs- oder leichtbau- oder kostenbedingt, wenigstens eine Tasche (44) ausgebildet ist.

Offenbart sind weiterhin eine Förderkette mit derartigen Kettengliedern, sowie ein Transfersystem mit einer derartigen Förderkette.

## Beschreibung

### Technisches Gebiet

Die Erfindung betrifft ein Kettenglied für eine kurvengängige Förderkette für ein Transfersystem gemäß dem Oberbegriff des Anspruchs 1, eine kurvengängige Förderkette für ein Transfersystem gemäß Anspruch 9, sowie ein Transfersystem mit einer kurvengängigen Förderkette gemäß Anspruch 10.

Ein Transfersystem dient dem effizienten Transport von Gut, beispielsweise einem Werkstück oder einem Produkt, und hat eine Schienen- oder Rahmenstruktur mit wenigstens einem daran in Transferrichtung umlaufenden Fördermittel auf dem das Gut abgestützt und mitgenommen wird. Als Fördermittel sind bandförmige Zugträger, und alternativ Förderketten mit plattenförmigen Kettengliedern in Gebrauch.

Förderketten haben den Vorteil, dass sie aufgrund ihrer gliedrigen Bauweise enge Kurvenradien in der Förderebene ermöglichen. Um eine Koppelfunktion untereinander und eine Tragfunktion bezüglich des zu fördernden Gutes optimiert erfüllen zu können, sind Kettenglieder häufig, alternativ zu einteiligen Ausführung aus Koppelabschnitt und Förderplatte, mehrteilig ausgebildet. Die Basis bildet dabei ein mit benachbarten Grundkettengliedern koppelbares Grundkettenglied. Oberseitig am Grundkettenglied ist die Förderplatte oder Mitnahmeplatte angeordnet, wobei zwischen den Förderplatten keine relevanten Zug- oder Querkräfte übertragen werden können. Diese Kraftübertragung erfolgt über die gelenkig gekoppelten Grundkettenglieder. Das jeweilige Gelenk erlaubt dabei die Verschwenkung um wenigstens zwei Achsen. Eine erste der Achsen erstreckt sich parallel zur Förderebene und quer zur Förderrichtung und ermöglicht die Umlenkung der Förderkette an einem Umkehrpunkt des Transfersystems, an dem die Förderkette zurückgeführt wird. Eine zweite Achse des Gelenks, die sich normal zur Förderebene erstreckt, ermöglicht die Kurvengängigkeit der Kettenglieder in der Förderebene. Das auf die Anmelderin zurückgehende Patent EP 275 09 93 B1 zeigt den strukturellen Aufbau eines solchen Grundkettengliedes. Die ebenso auf die Anmelderin zurückgehende Druckschrift DE 102 011 112 398 A1 zeigt eine mit dem Grundkettenglied verrastete Förderplatte.

Ein auf diesem Konzept basierendes Transfersystem ist das *Vario Flow Plus* aus dem Produktportfolio der Anmelderin, wobei hier Förderplatten mit unterschiedlichsten Grund- und Randquerschnitten gezeigt sind. Insbesondere sind auch Förderplatten gezeigt, die eine stirnseitige und rückseitige Verzahnung benachbarter Förderplatten ermöglichen.

Förderplatten weisen in der Regel auf Gründen der Fertigung, des Leichtbaus oder zum Zwecke der Kostenersparnis unterseitig flächige Aussparungen oder Taschen auf, was im Patent EP 264 32 45 B1 verdeutlicht ist. Nachteilig ist hierbei, dass sich in diesen Taschen Schmutz und Flüssigkeiten sammeln können, insbesondere wenn die Förderplatte bei ihrem Umlauf im Untertrum des Fördersystems oder Transfersystems läuft und die Tasche dann entgegen der Schwerkraft nach oben weist. Eine einfache Reinigung der Förderkette mittels Reinigungsflüssigkeit ist erschwert, da sich in den Taschen auch Reinigungsflüssigkeit sammelt. Insbesondere für Anwendungen, die strengen hygienischen Bestimmungen unterliegen, führt die Ausgestaltung mit Taschen zu hohen Aufwänden, da für eine rückstandlose Reinigung die Förderkette demontiert werden oder die in den Taschen des Untertrums angesammelte Flüssigkeit abgesaugt oder ausgeblasen werden muss.

Demgegenüber liegt der Erfindung die Aufgabe zu Grunde, ein Kettenglied für eine Förderkette für ein Transfersystem zu schaffen, das weniger aufwändig zu reinigen ist. Eine weitere Aufgabe ist es, eine Förderkette und ein Transfersystem mit Förderkette zu schaffen, die/das weniger aufwändig zu reinigen ist.

Die erste Aufgabe wird gelöst durch ein Kettenglied mit den Merkmalen des Anspruchs 1, die zweite Aufgabe durch eine Förderkette mit den Merkmalen des Anspruchs 9 und die dritte Aufgabe durch ein Transfersystem mit den Merkmalen des Anspruchs 10.

Vorteilhafte Weiterbildungen der jeweiligen Erfindung sind Gegenstand der jeweiligen Unteransprüche.

Ein Kettenglied für eine oder einer kurvengängigen Förderkette, für ein oder eines Transfersystems, hat offenbarungsgemäß eine Förderplatte mit einer Oberseite. Die Oberseite ist vorgesehen und ausgestaltet, ein zu förderndes Gut zu stützen, Insbesondere betrifft das natürlich einen Betriebszustand, in dem das Kettenglied in einem Obertrum der Förderkette angeordnet ist oder läuft. An einer der Oberseite gegenüber angeordneten Unterseite der Förderplatte ist, insbesondere fertigungs- oder leichtbau- oder kostenbedingt, wenigstens eine Tasche, Ausnehmung oder Mulde ausgebildet. Offenbarungsgemäß hat ein Rand dieser Tasche wenigstens einen Durchbruch nach außen. Dieser ist vorgesehen und ausgestaltet, dass ein Fluid aus der Tasche ausströmbar ist. Offenbarungsgemäß ist die Ausgestaltung derart, dass die Ausströmbarkeit selbst dann gegeben ist, wenn das Kettenglied in einem Untertrum des Fördersystems oder Transfersystems angeordnet ist und/oder läuft, das heißt, wenn die Unterseite entgegen der Schwerkraft nach oben weist.

Auf diese Weise kann Fluid aus der, insbesondere fertigungs- oder leichtbau- oder kostenbedingt eingebrachten, Tasche ablaufen oder es sammelt sich erst gar nicht in nennenswerter Menge an. So ist eine einfache und wenig aufwändige Reinigung der Förderkette und des Transfersystems ohne den Ausbau der Förderkette und ohne ein aufwändiges Absaugen von Restflüssigkeit aus den Taschen von im Untertrum stehenden Förderplatten ermöglicht.

Gemäß einer bevorzugten Weiterbildung ist der Durchbruch vorgesehen und ausgestaltet, dass das Fluid selbsttätig ausströmbar ist. Es sind daher keine zusätzlichen Vorrichtungen oder Handlungen nötig, um die Tasche zu leeren, was den Reinigungsaufwand reduziert.

Gemäß einer besonders bevorzugten Weiterbildung ist der Durchbruch vorgesehen und ausgestaltet, dass das Fluid aufgrund der Schwerkraft ausströmbar ist. Alternativ oder ergänzend ist der Durchbruch vorgesehen und ausgestaltet, dass das Fluid aufgrund einer Bewegung des Kettengliedes, vorzugsweise einer Bewegung in dessen bestimmungsgemäßer Laufrichtung, ausströmbar ist. Beide Ausgestaltungen sind vorzugsweise kombiniert.

Um die Ausströmung des Fluids bei bestimmungsgemäßer Laufrichtung gut zu ermöglichen, ist der wenigstens eine Durchbruch gemäß einer Weiterbildung an einem Randabschnitt der Tasche angeordnet, welcher die Tasche bezogen auf die bestimmungsgemäße Laufrichtung des Kettengliedes rückwärtig berandet. In anderen Worten ist dieser Randabschnitt entgegen der bestimmungsgemäßen Laufrichtung des Kettengliedes angeordnet.

Gemäß einer bevorzugten Weiterbildung ist ein Boden der Tasche in Richtung hin zum wenigstens einen Durchbruch abschüssig, wodurch die Schwerkraft wirksam wird und das selbsttätige Abströmen bewirkt. Diese Definition bezieht sich vorzugsweise auf die Anordnung des Kettengliedes im Untertrum.

Gemäß einer bevorzugten Weiterbildung ist ein Boden des wenigstens einen Durchbruchs in Richtung weg von der Tasche abschüssig ist.

In anderen Worten ausgedrückt ist der jeweilige Boden der Tasche und/oder des Durchbruchs mit Bezug zur Oberseite derart angewinkelt, dass bei Anordnung des Kettengliedes im Untertrum der Boden der Tasche hin zum Durchbruch und/oder der Boden des Durchbruchs in Richtung weg von der Tasche abschüssig ist.

Gemäß einer bevorzugten Weiterbildung kragen an einer Stirnseite der Förderplatte in der bestimmungsgemäßen Laufrichtung des Kettengliedes und an einer Rückseite der Förderplatte in Gegenrichtung jeweils Zähne aus, die ausgestaltet und angeordnet sind, zwischen in der Förderkette benachbart anordenbaren Förderplatten einen kurvengängigen Eingriff auszubilden.

Vorzugsweise erstreckt sich der wenigstens eine Durchbruch in eine von den Zähnen gebildete Zahnlücke hinein, oder er erstreckt sich an oder entlang einem der Zähne, hin zu dessen Zahnspitze.

Das Abströmen ist weiter verbessert, wenn gemäß einer Weiterbildung mehrere derartige Durchbrüche vorgesehen sind.

Gemäß einer Weiterbildung hat das Kettenglied ein Grundkettenglied, an dem die Förderplatte angeordnet ist, und das, insbesondere zur Ausbildung der Förderkette, in bestimmungsgemäßer Laufrichtung des Kettengliedes, sowie in Gegenrichtung je einen Gelenkabschnitt zur gelenkigen Kopplung mit dem Grundkettenglied eines benachbart anordenbaren Kettengliedes hat. Ein Grundkettenglied ist im Sinne der Offenbarung ein mit einem Antriebsrad oder einer Antriebswelle, oder allgemein einer Antriebskraftraftübertragung des Transfersystems, in Eingriff, insbesondere in Kraft-, Form- und/oder Reibschluss bringbarer Abschnitt des Kettengliedes. Vorzugsweise hat das Grundkettenglied stirn- und rückseitig den je einen Gelenkabschnitt, über den es mit dem in der Förderkette nächsten Grundkettenglied gelenkig koppelbar ist. Die Gelenkabschnitte sind vorzugsweise so ausgestaltet, dass wenigstens zwei Rotationsachsen ausgebildet sind, die eine Umlenkung der Förderkette an deren Umkehrpunkt und eine Umlenkung der Förderkette an einer Kurve des Transfersystems - das heißt, Kurvengängigkeit - ermöglichen. Am Grundkettenglied ist offenbarungsgemäß vorzugsweise die Förderplatte angeordnet, vorzugsweise verrastet. Alternativ ist das Grundkettenglied mit der Förderplatte einstückig gebildet.

Offenbarungsgemäß ist sowohl an der Stirnseite, als auch an der Rückseite wenigstens ein mit Bezug zur Förderrichtung randseitig zum Zahn angeordneter Zahngrund von einem Steg zumindest teilverfüllt. In anderen Worten: eine Lücke zwischen zwei randseitig angeordneten Zähnen, jeweils an der Stirn- und an der Rückseite, ist von einem Steg zumindest teilverfüllt.

Auf diese Weise ist eine vom Zahngrund gebildete Lücke verkleinert, sodass ein Eingriff einer Person in den Zahngrund während des Betriebes erschwert - vorzugsweise verhindert - ist. Zugleich ist eine freie Länge der den Zahngrund ausbildenden Zähne verringert und diese Zähne sind bei einer vorgegebenen Länge - bemessen vom Zahngrund ausgehend - und Breite - bemessen quer zur Förderrichtung - mechanisch stabiler, als mit einem unverfüllten Zahngrund.

Vorzugsweise hat die Förderplatte einen sich in Förderrichtung und quer dazu erstreckenden Kernabschnitt, aus dem die Zähne oder zumindest Zahnabschnitte oder Zahnköpfe auskragen, und in den zumindest die teilverfüllten Zahngründe eingebuchtet sind. Das Auskragen und Einbuchten ist dabei an der Stirnseite mit Bezug zur Laufrichtung, an der Rückseite mit Bezug zur Gegenrichtung definiert.

Der Kernabschnitt ist vorzugsweise als eine Platte oder ein Quader ausgebildet. Vorzugsweise ist er in Förderrichtung kürzer als quer zur Förderrichtung und erstreckt sich beidseitig des Grundgelenks hin zu den Randseiten.

Die Quaderform bedingt einen reckeckigen Grundquerschnitt. Ausgenommen aus diesem Grundquerschnitt sind, wie oben erwähnt, vorzugsweise die auskragenden Zähne oder Zahnköpfe und die einbuchtenden Zahngründe. Die Quaderform vereinfacht die Umlenkung des Kettengliedes und damit der Förderkette am Umkehrpunkt. Zudem stellt der so geformte Kernabschnitt einen Balken mit hoher Stabilität dar.

Die wenigstens eine Tasche erstreckt sich vorzugsweise von mittig, insbesondere aus einem Bereich oder Nahbereich des Grundkettengliedes, nach randseitig, das heißt in Richtung hin zu den Randseiten der Förderplatte. Vorzugsweise erstreckt sie sich von mittig nach randseitig verjüngend, insbesondere stufig verjüngend.

Damit stets eine ausreichende Materialstärke zwischen der Tasche und den Zahngründen vorgesehen ist, ist gemäß einer Weiterbildung eine ausreichende Höhe oder Dicke der Förderplatte vorgesehen. Alternativ oder ergänzend ist eine nach randseitig zunehmende Verjüngung der Tasche vorgesehen. Die Verjüngung setzt in genannter Richtung vorzugsweise vor dem oder zu dem ersten der Zahngründe an, der tiefer als die vorherigen eingebuchtet ist.

Vorzugsweise ist die Verjüngung in Abhängigkeit einer Tiefe der Zahngründe ausgebildet, wobei die Verjüngung an einer Position umso stärker ist, je tiefer ein zur Ausnehmung benachbarter Zahngrund ist.

Vorzugsweise ist die Verjüngung symmetrisch zu einer Querachse der Förderplatte.

Eine Förderkette, die kurvengängig ist, hat mehrere Kettenglieder, die jeweils nach wenigstens einem Aspekt der vorhergehenden Beschreibung ausgebildet sind, und die in wenigstens zwei Achsen gelenkig miteinander verbunden sind. Dabei sind vorzugsweise die stirnseitigen Zähne der einen Förderplatte mit den rückseitigen Zahngründen der in Förderrichtung benachbart angeordneten Förderplatte in kurvengängigem Eingriff, wobei vorzugsweise wenigstens die randseitigen der Zahngründe derart teilverfüllt sind, dass auch in einer Kurve ein menschlicher Eingriff zwischen zwei Förderplatten unmöglich ist.

Vorzugsweise sind die Stege derart bemessen, dass ein Spalt zwischen einem Zahn der Förderplatte und einem zugordneten Zahngrund der benachbarten Förderplatte in jedem Fall, das heißt bei gerader Förderung und bei Förderung in einer Kurve, kleiner als 5-1 0mm, vorzugsweise kleiner als 8mm, ist.

Ein Transfersystem hat eine Tragstruktur und eine daran geführte und in wenigstens zwei Achsen umgelenkten Förderkette, die gemäß wenigstens einem Aspekt der vorhergehenden Beschreibung ausgestaltet ist.

Ein bevorzugtes Ausführungsbeispiel der Erfindung wird im Folgenden anhand von Zeichnungen näher erläutert.

Es zeigen:
Figur 1 ein Transfersystem gemäß einem Ausführungsbeispiel mit einer kurvengängigen Förderkette, in perspektivischer Ansicht;
Figur 2 ein Kettenglied für eine kurvengängige Förderkette gemäß einem Ausführungsbeispiel, in perspektivischer Ansicht;
Figur 3 eine kurvengängige Förderkette gemäß einem Ausführungsbeispiel mit Kettengliedern gemäß Figur 1 und 2, in einer Ansicht von oben;
Figur 4 die Förderkette gemäß Figur 3 in einer Kurvenfahrt, in einer Ansicht von oben;
Figur 5 eine Förderplatte eines Kettengliedes der Förderkette gemäß den Figuren, in einer Ansicht von unten;
Figur 6 mehrere Förderplatten der Förderkette gemäß den Figuren, in einer perspektivischen Ansicht von unten; und
Figur 7 eine Förderplatte gemäß den Figuren, in einer geschnittenen Seitenansicht.

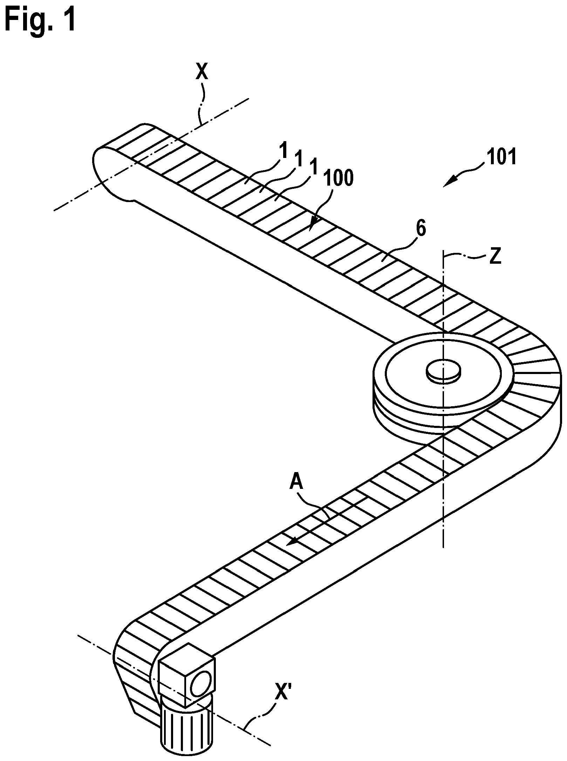

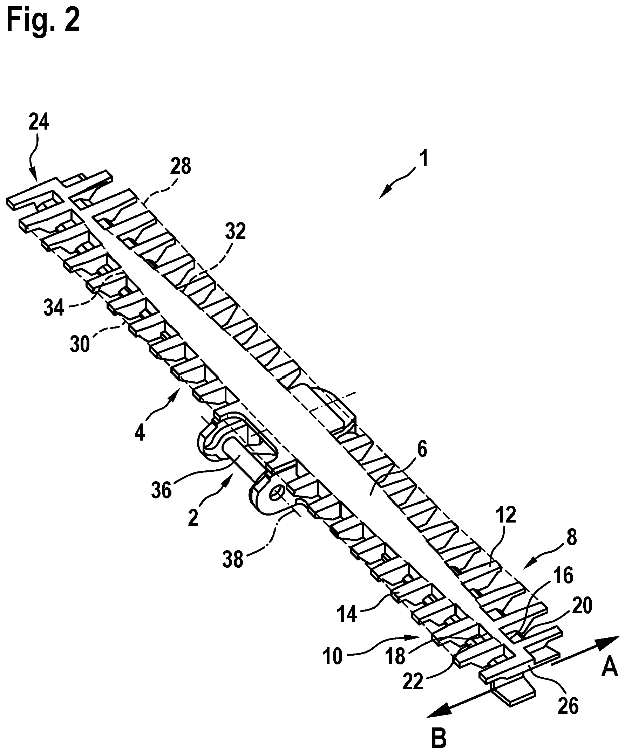

Figur 1 zeigt ein Transfersystem 101 gemäß einem Ausführungsbeispiel mit einer kurvengängigen Förderkette 100. Kettenglieder 1 der Förderkette 100 sind über ein jeweiliges Grundkettenglied (in Figur 1 nicht dargestellt, vergleiche 2, Figur 2 ff.) derart gelenkig gekoppelt, dass die Förderkette 100 um Achsen X, X` und Z umlenkbar ist. Jedes Kettenglied hat eine Oberseite 6, auf der zu fördernde Gut abgelegt und mitgenommen wird. Die Achsen X und X` sind mit Bezug zur Förderkette 100 gleichwirkend und bewirken deren Umlenkung an Umkehrpunkten des Transfersystems 101. Die Achse Z ist eine Mittelachse eines Kurvenmittelpunktes des Transfersystems 101 und bewirkt die Umlenkung der Förderkette 100 in einer Förderebene. Ein Obertrum der Förderkette 100 bewegt sich im Betrieb in bestimmungsgemäßer Laufrichtung oder Förderrichtung A. Ein Untertrum der Förderkette 100 wird unterseitig am Transfersystem 101 zurückgeführt. Auf weitere Erläuterungen zum Aufbau des Transfersystems 101 wird an dieser Stelle verzichtet, da ein solcher, beispielsweise vom System *Vario Flow Plus* der Anmelderin, hinreichend bekannt ist.

Figur 2 zeigt eines der Kettenglieder 1 in perspektivischer Ansicht von oben. Das Kettenglied 1 hat ein Grundkettenglied 2, an dem oberseitig eine Förderplatte 4 angeordnet, insbesondere verrastet ist. Das Grundkettenglied 2 dient der Kopplung der Kettenglieder 1 zur Ausbildung der Förderkette 100. Der Aufbau eines solchen Grundkettengliedes 2 ist hinreichend aus dem Stand der Technik bekannt, insbesondere aus der Patentschrift EP 2 750 993 B1, die auf der Anmelderin zurückgeht. Zum Zwecke der Offenbarung wird auf diese Schrift verwiesen.

Das mit der Förderplatte 4 ausgebildete Kettenglied 1 dient der kurvengängigen Förderung bei gleichzeitig großer Stabilität und hoher Prozesssicherheit, insbesondere Sicherheit gegen den Eingriff eines Menschen in bestehende Zwischenräume. Eine Aufgabe der offenbarungsgemäß ausgestalteten Förderkette 100 ist, die einfache Reinigung der Förderkette 100, insbesondere der Kettenglieder 1, zu ermöglichen. Diese Aufgabe wird insbesondere durch die offenbarungsgemäße, geometrische Ausgestaltung der Förderplatte 4 gelöst, die im Folgenden näher beschrieben wird. Demgemäß hat die Förderplatte 4 gemäß Figur 2 an einer in Förder- oder Laufrichtung A weisenden Stirnseite 8, beidseitig des Grundkettengliedes 2, eine Reihe von Zähnen 12, zwischen denen sich Zahngründe 16 absenken. In Analogie dazu, an einer in Gegenrichtung B weisenden Rückseite 10 der Förderplatte 4, ist eine Reihe von Zähnen 14 mit entsprechenden Zahngründen 18 ausgebildet. Eine Länge oder Erstreckung der Zähne 12, 14 nimmt mit zunehmendem Abstand vom Grundkettenglied 2, in Richtung hin zu Randseiten 24, 26 zu. Die Länge ist als Erhebung von Köpfen der Zähne 12, 14 über den jeweils benachbarten Zahngrund 16, 18 bemessen. Um die Figur 2 nicht zu überfrachten, wurde darauf verzichtet, alle Zahngründe und Zähne mit Bezugszeichen zu versehen. Der einfacheren Darstellung halber wurde auf die Darstellung von Verrundungen verzichtet. Aus Figur 2 wird ersichtlich, dass offenbarungsgemäß randseitigere der Zahngründe 16, 18 mit einem Steg 20, 22 teilverfüllt sind. Auf diese Weise sind zwar sehr tiefe Zahngründe 16, 18 möglich - was unmittelbar Einfluss auf den erreichbaren Knickwinkel der Kettenglieder und die Kurvengängigkeit hat - gleichzeitig werden über die Stege 20, 22 die benachbarten Zähne 12, 14 stabilisiert und ein menschlicher Eingriff in den Zahngrund 16, 18, beispielsweise mit einem einzelnen Finger, kann verhindert werden. Stirnseitige, in Förderrichtung A weisende Zahngründe 16 und rückseitige, in Gegenrichtung B weisende Zahngründe 18, die jeweils nahe am Grundkettenglied 2 angeordnet sind, sind hingegen unverfüllt, das heißt, sie weisen keinen Steg auf.

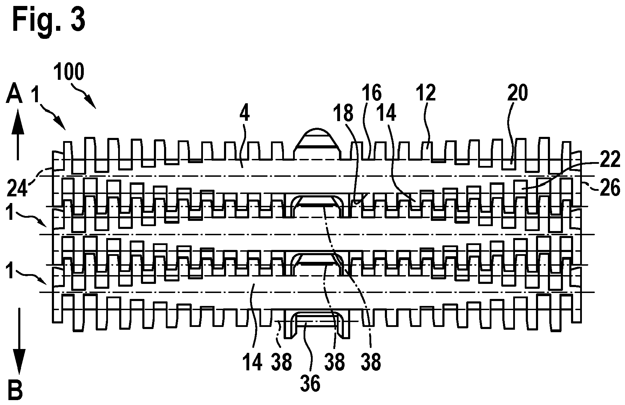

Figur 3 zeigt drei gleiche Kettenglieder 1, die über die Grundkettenglieder 2 zu einem Abschnitt der Förderkette 100 gekoppelt sind. Zur Kopplung weist das jeweilige Grundkettenglied 2 einen rückseitig angeordneten Querbolzen 36 und eine stirnseitig angeordnete Bolzenaufnahme (nicht näher dargestellt) auf. Die Bolzenaufnahme des in der Förderkette 100 in Gegenrichtung B jeweils rückseitig benachbarten Kettengliedes 1 ist mit dem Querbolzen 36 des in Förderrichtung A angeordneten Kettengliedes 1 derart gekoppelt, dass die beiden Kettenglieder 1 um die Bolzenlängsachse 38 und um eine mit Bezug zur Förderrichtung A ausgebildete Hochachse des Querbolzens 36, schwenkbar sind. Über die Bolzenlängsachse 38 ist die Umlenkung der Förderkette 100 an den Umkehrpunkten und über die Hochachse die kurvengängige Umlenkung der Förderkette 100 in Kurven des Transfersystems 101 gewährleistet. Diese zweiachsige Kopplung ist aus der oben genannten, auf die Anmelderin zurückgehenden Patentschrift EP 2 750 993 B1 bereits hinreichend bekannt, sodass auf diese an dieser Stelle zum Zwecke der Offenbarung verwiesen sei.

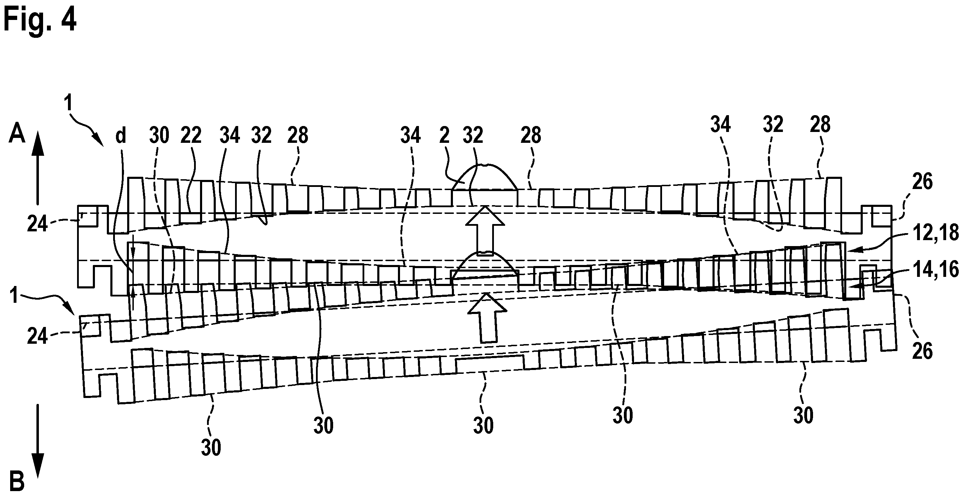

Figur 4 zeigt einen Abschnitt der Förderkette 100 gemäß den vorangegangenen Figuren in einer Kurvenfahrt. In der Kurve sind die Kettenglieder 1 mit einem vom Kurvenradius abhängigen Knickwinkel gegeneinander angestellt. Die in Figur 4 gezeigte Konstellation zeigt dabei den maximal möglichen Knickwinkel, beziehungsweise den kleinstmöglichen Kurvenradius. Die Randseiten 26 sind auf der Innenseite, die Randseiten 24 auf Außenseite der Kurve angeordnet. Kurveninnenseitig, diesseits der Grundkettenglieder 2, fahren die stirnseitigen Zähne 12 des in Förderrichtung A nacheilenden Kettenglieds 1 vollständig in die rückseitigen Zahngründe 18 des in Förderrichtung A vorauseilenden Kettengliedes 1 ein und die rückseitigen Zähne 14 des in Förderrichtung A vorauseilenden Kettenglieds 1 fahren vollständig in die stirnseitigen Zahngründe 16 des in Förderrichtung A nacheilenden Kettengliedes 1 ein. Kurvenaußenseitig, jenseits des Grundkettengliedes 2, sind die beiden sich gegenüberstehenden Zahnreihen 12, 14 ausgerückt sind und kämmen nur im Scheitelbereich der Zahnköpfe. In dieser Kurvenkonstellation resultiert kurvenaußenseitig am randseitigsten der mit einem gegenüberliegenden Zahn in Eingriff befindlichen Zahngrund ein größtmöglicher Spalt d, der mittels des jeweiligen Steges 22 limitiert ist. Im Falle des Ausführungsbeispiels ist der Spalt auf 8mm limitiert, sodass der Eingriff eines menschlichen Fingers in den Spalt d verhindert ist.

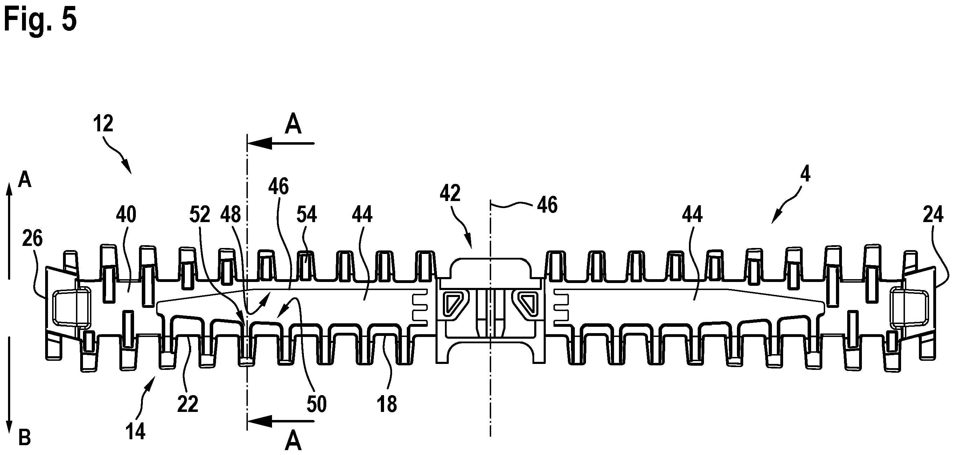

Figur 5 zeigt eine Förderplatte 4 eines Kettengliedes 1 der Förderkette 100 in einer Ansicht von unten, sodass eine Unterseite 40 der Förderplatte 4 sichtbar ist. Die bestimmungsgemäße Laufrichtung A und die entsprechende Gegenrichtung B sind gekennzeichnet, auf die Darstellung des Grundkettengliedes 2 wird hingegen aus Gründen der Übersichtlichkeit verzichtet. In die bestimmungsmäße Förderrichtung A weisen die stirnseitigen Zähne 12, in die Gegenrichtung B weisen die rückseitigen Zähne 14. Gemäß Figur 5 weist die Förderplatte 4 in der Unterseite 40, beidseitig eines Mittenabschnittes 42, an welchem Rastelemente zur Verrastung mit dem Grundkettenglied vorgesehen sind, je eine großflächige Tasche oder Ausnehmung 44 auf. Die Taschen 44 sind bezüglich einer, sich in Förderrichtung A erstreckenden, Mittelebene 46 symmetrisch ausgebildet, sodass die Beschreibung der Taschen 44 im Folgenden allein anhand der in Figur 5 linken Tasche 44 erfolgen kann.

Die in Figur 5 linke Tasche 44 hat einen Rand 46, entlang dem die Tasche 44 gegen die Unterseite 40 der Förderplatte 4 abgesenkt ist. Der Rand 46 hat stirnseitig einen geschlossenen, in Richtung der Förderrichtung A weisenden Randabschnitt 48 und rückseitig einen mehrere Unterbrechungen oder Durchbrüche 52 aufweisenden, in Gegenrichtung B weisenden Randabschnitt 50. Ausgehend vom Mittenabschnitt 42 erstrecken sich beide Randabschnitte 48, 50 zunächst parallel zueinander und parallel zur jeweiligen Stirnseite und Rückseite der Förderplatte 4. In Richtung der Randseite 26 etwa auf halber Länge verlaufen die Randabschnitte 48, 50 eingewinkelt, sodass sie etwa auf einer ¾ Länge der Förderplatte 4 - bemessen ab der Mittelebene 46 - zusammentreffen.

Der jeweilige Durchbruch 52 erstreckt sich vom Randabschnitt 50 bis in den Bereich einer Zahnspitze des jeweiligen Zahns 14 hinein. Alternativ oder ergänzend ist es natürlich möglich, dass sich die Durchbrüche in die jeweiligen Zahngründe 18 oder Stege 22 hinein erstrecken. Im gezeigten Ausführungsbeispiel wurde die dargestellte Option gewählt, da ohnehin alle Zähne 12, 14 aus Gründen der Fertigung, des Leichtbaus und der Materialersparnis an ihrer Unterseite eine Aussparung 54 aufweisen. In diese mündet der jeweilige Durchbruch 52.

Offenbarungsgemäß stellen die Durchbrüche 52 Abströmkanäle dar, über die Flüssigkeit, die in die Tasche 44 gelangt, selbst dann abströmen kann, wenn die Förderplatte 4 im Untertrum läuft, also selbst dann, wenn die Tasche 44 bezogen auf die Schwerkraft nach oben weist. Die Förderkette 100 kann dadurch auf einfachste Weise gereinigt werden, da Reinigungsmittel stets abströmen kann. Aus diesem Grund eignet sich die Förderkette mit den offenbarungsgemäßen Kettengliedern 1 und Förderplatten 4 besonders für den Einsatz in Umgebungen, in denen hohe Ansprüche an die Sauberkeit und/oder Hygiene des Transfersystems 101 gestellt werden, wie beispielsweise in der Nahrungsmittelverarbeitung oder in einer Aufbereitungseinheit für Medizinprodukte.

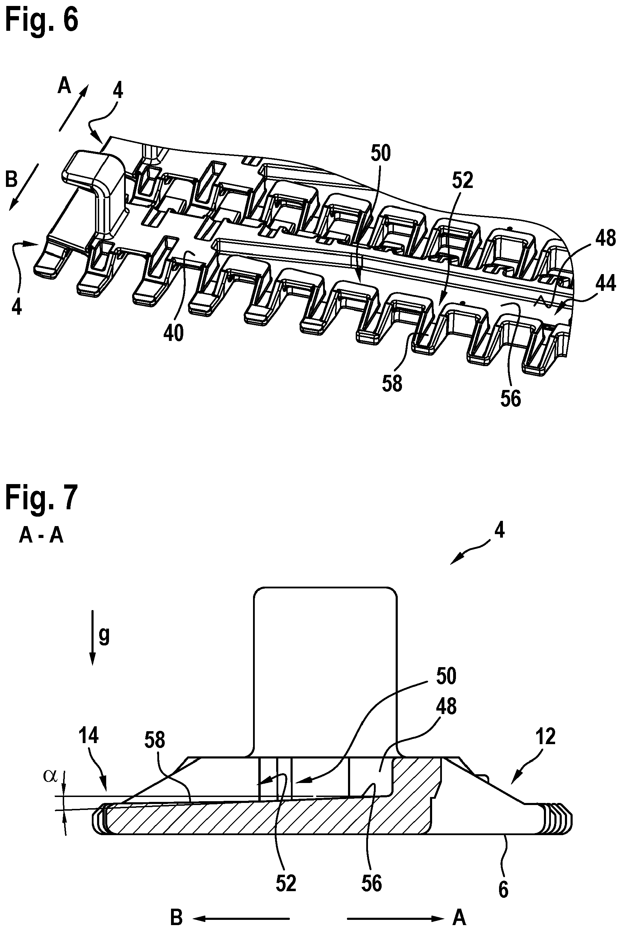

Figur 6 zeigt zwei benachbarte, in Eingriff befindliche Förderplatten 4 gemäß Figur 5, wie sie in der Förderkette 100 gemäß den Figuren 1 bis 4 angeordnet sind, in einer perspektivischen, vergrößerten Ansicht von unten. Dabei ist gut ersichtlich, dass die Durchbrüche 52 rückseitig, also entgegen der bestimmungsgemäßen Förderrichtung A, aus der Tasche 44 ausmünden. Auf diese Weise führt die Bewegung der Förderkette 100 in Förderrichtung A zu einer Unterstützung des Abströmens von Flüssigkeit aus der Tasche 44 in Gegenrichtung B.

Unterstützt wird das Abströmen zudem dadurch, dass ein Boden 56 der Tasche 44 und auch ein Boden 58 des Durchbruchs 52 in Gegenrichtung B abschüssig sind, was anhand dem in Figur 5 definierten und in Figur 7 gezeigten Schnitt A-A verdeutlicht wird.

Figur 7 zeigt die Förderplatte 4 in einem gemäß Figur 5 definierten Schnitt A - A und damit, mit Bezug zur bestimmungsgemäßen Förderrichtung A, in einem Längsschnitt. Zur Verdeutlichung ihrer räumlichen Orientierung ist die Schwerkraftrichtung in Figur 7 oben links mit dem Pfeil und g symbolisiert. In der Praxis ist das dann der Fall, wenn die betreffende Förderplatte 4 im Untertrum läuft.

Figur 7 verdeutlicht, dass die Böden 56 und 58 der Tasche 44 und des Durchbruchs 52 mit Bezug zur Schwerkraft abschüssig sind.

Ein Winkel α des Bodens 56 der Tasche 44 mit Bezug zur Oberseite 6 der Förderplatte 4 beträgt im gezeigten Ausführungsbeispiel etwa 3°.

Ein Winkel des Bodens 58 des Durchbruchs 52 mit Bezug zur Oberseite 6 der Förderplatte 4 beträgt im gezeigten Ausführungsbeispiel etwa 1°.

Aus Gründen der Übersichtlichkeit ist letztgenannter Winkel in Figur 7 ohne ein Winkelmaß dargestellt.

Offenbart ist ein kurvengängiges Kettenglied für eine oder einer kurvengängigen Förderkette eines Transfersystems, wobei das Kettenglied eine Förderplatte mit einer Oberseite hat, an der bei Anordnung des Kettengliedes in einem Obertrum der Förderkette ein zu förderndes Gut gestützt ist. An einer Unterseite der Förderplatte ist wenigstens eine Tasche ausgebildet. Ein Rand der Tasche weist wenigstens einen Durchbruch oder eine Absenkung oder eine Lücke auf, durch den oder die Fluid aus der Tasche ausströmen kann, insbesondere wenn das Kettenglied in einem Untertrum der Förderkette angeordnet ist oder läuft.

Offenbart sind zudem eine Förderkette mit einer Vielzahl derartiger Kettenglieder, die jeweils miteinander um wenigstens zwei Achsen schwenkbar gekoppelt sind. Offenbart ist zudem ein Transfersystem mit einer Tragstruktur, an der eine derartige Förderkette geführt und umgelenkt ist.

## Patentansprüche

1. Kettenglied (1) für eine kurvengängige Förderkette (100) oder einer kurvengängigen Förderkette (100) für ein oder eines Transfersystems (101), mit einer Förderplatte (4) mit einer Oberseite (6), die vorgesehen und ausgestaltet ist, insbesondere bei Anordnung des Kettengliedes (1) in einem Obertrum des Transfersystems (101), ein zu förderndes Gut zu stützen, wobei an einer Unterseite (40) der Förderplatte (4), insbesondere fertigungs- oder leichtbau- oder kostenbedingt, wenigstens eine Tasche (44) ausgebildet ist, **dadurch gekennzeichnet, dass** ein Rand (46) der Tasche (44) wenigstens einen Durchbruch (52) hat, der vorgesehen und ausgestaltet ist, dass Fluid aus der Tasche (44) ausströmbar ist, insbesondere bei Anordnung des Kettengliedes (1) in einem Untertrum des Transfersystems (101).

2. Kettenglied (1) nach Anspruch 1, wobei der wenigstens eine Durchbruch (52) vorgesehen und ausgestaltet ist, dass das Fluid selbsttätig ausströmbar ist.

3. Kettenglied (1) nach Anspruch 1 oder 2, wobei der wenigstens eine Durchbruch (52) vorgesehen und ausgestaltet ist, dass das Fluid, aufgrund der Schwerkraft und/oder aufgrund einer Bewegung des Kettengliedes (1) in eine bestimmungsgemäße Förderrichtung (A), ausströmbar ist.

4. Kettenglied (1) nach einem der vorhergehenden Ansprüche, wobei der wenigstens eine Durchbruch (52) an einem Randabschnitt (50) angeordnet ist, der entgegen einer bestimmungsgemäßen Förderrichtung (A) des Kettengliedes (1) angeordnet ist.

5. Kettenglied (1) nach einem der vorhergehenden Ansprüche, wobei ein Boden (56) der Tasche (44) in Richtung hin zum wenigstens einen Durchbruch (52) abschüssig ist.

6. Kettenglied (1) einem der vorhergehenden Ansprüche, wobei ein Boden (58) des wenigstens einen Durchbruchs (52) in Richtung weg von der Tasche (44) abschüssig ist.

7. Kettenglied (1) nach einem der vorhergehenden Ansprüche, wobei an einer Stirnseite (8) der Förderplatte (4) in bestimmungsgemäßer Förderrichtung (A) des Kettengliedes (1) und an einer Rückseite (10) der Förderplatte (4) in Gegenrichtung (B) jeweils Zähne (12, 14) auskragen, die ausgestaltet und angeordnet sind, zwischen in der Förderkette (100) benachbart anordenbaren Förderplatten (4) einen kurvengängigen Eingriff auszubilden.

8. Kettenglied (1) nach Anspruch 7, wobei sich der wenigstens eine Durchbruch in eine von den Zähnen gebildete Zahnlücke hinein erstreckt, und/oder wobei sich der wenigstens eine Durchbruch (52) an oder entlang einem der, insbesondere in Gegenrichtung (B) weisenden, Zähne (14) hin zu dessen Zahnspitze erstreckt.

9. Förderkette (100), die kurvengängig ist, mit Kettengliedern (1), die jeweils nach einem der vorhergehenden Ansprüchen ausgebildet sind, und die in wenigstens zwei Achsen (38) gelenkig miteinander verbunden sind.

10. Transfersystem (101) mit einer Tragstruktur und einer daran geführten und in wenigstens zwei Achsen (X, X`, Y) umgelenkten Förderkette (100), die gemäß Anspruch 9 ausgebildet ist.
